# EUROPEAN PATENT SPECIFICATION

(11) **EP 0 674 796 B1**
(45) Date of publication and mention of the grant of the patent: **25.03.1998**
(21) Application number: 94903546.3
(22) Date of filing: 09.12.1993
(51) Int. Cl.: G09B 27/08

(54) **SUNLIT WORLD GLOBE**
ERDGLOBUS MIT SONNENBELEUCHTUNG
GLOBE TERRESTRE ECLAIRE PAR LE SOLEIL

(30) Priority: 18.12.1992 US 993356; 23.11.1993 US 156464
(43) Date of publication of application: 04.10.1995
(73) Proprietor: SCOTT, Graig, S., Bellevue, WA 98005 (US)
(72) Inventor: SCOTT, Graig, S., Bellevue, WA 98005 (US)
(74) Representative: Grünecker, Kinkeldey, Stockmair & Schwanhäusser Anwaltssozietät
(86) International application number: US9311963
(87) International publication number: WO9415325

(56) References cited:
- EP-A- 0 403 102
- WO-A-88/05198
- DE-B- 1 262 056
- DE-U- 9 109 161
- FR-A- 1 350 640
- FR-A- 1 475 836
- US-A- 4 083 122

## Description

### TECHNICAL FIELD

The invention relates to chronological instruments. More specifically, the invention relates an apparatus indicating day/night demarcations on planetary models according the preamble of claim 1.

Such a device is known from FR-A-1 475 836.

### BACKGROUND OF THE INVENTION

A variety of methods and techniques have been developed for simulating the appearance of sunlight on world globe models. In most embodiments of this concept, a globe model representing the earth is internally illuminated by a baffled light source. The globe is typically semi-transparent, and the baffle is arranged so that one half of the globe is in simulated sunlight, while the remaining half is in simulated darkness. Manual or automatic mechanisms are employed to rotate the globe and baffle with respect to one another so that the demarkation between the night and day hemispheres of the globe rotate once each day (typically one revolution every 23 hours, 56 minutes to simulate sidereal time).

The prior art mechanisms for simulating this day/night demarkation range from simple to complex, from manual to automatic. One of the earliest prior art devices is described by Schulse in U.S. Patent No. 1,959,601 issued on May 22, 1934. Schulse describes a globe which rotates once each 24 hours. A lamp is fixed within and with respect to the globe behind a shield/filter to produce the desired day/night effect. The filter itself rotates about the lamp on an axis which is displaced 23.5 degrees with respect to the polar axis of the globe once each 365 days to simulate the effect of the seasons on the day/night illumination pattern. A conventional clock automatically drives the globe and shield/filter. Schulse's mechanism is relatively complex involving multiple gear trains and slip clutches, worm drives and concentric, rotating shafts all of which contribute to a relatively expensive chronological instrument. Devices such as this have not been readily accepted into the marketplace.

Others, such as Carlson in U.S. Patent No. 4,936,779 have provided an internally illuminating globe which simulates the day/night pattern on the surface on the earth with a substantially less complex mechanism. In Carlson, a lamp and interior baffle rotate once every 24 hours with respect to the globe to simulate a day/night illumination pattern through a semi-transparent globe shell. As is well know, the actual day/night pattern of the surface of the earth oscillates through ± 23.5 degrees with respect to the polar axis as the earth completes a circumrevolution about the sun. In order to avoid the complexities of devices such as those described by Schulse, Carlson employs an adjustable cam mechanism by way of an exterior knob and flexible cable. Adjustment of the knob rocks the baffle back and forth about an axis passing through the equator of the model to simulate the seasonal variation of the light pattern on the globe. Although Carlson's mechanism is substantially less complex than many prior art devices, the device is believed to nevertheless remain excessively complex to succeed in the marketplace.

Whereas Carlson's and Schulse's devices described above are completely automatic (i.e. motor driven) others have attempted to avoid complexity by combining a completely manually driven globe simulating the day/night illumination pattern on the earth. The device disclosed by Gardin in U.S. Patent No. 3,305,946 is intermediate in complexity between Schulse and Carlson in that adjustment of a single time of day ring, and day of year ring is sufficient to position an internal lamp with baffle appropriately to simulate the correct day/night pattern on the surface of the globe for a given time of day and year. Nevertheless, Gardin's mechanism still employs a plurality of beveled gears, counter-rotating shafts, etc. and has not found commercial acceptance in the marketplace. Other examples of day/night illuminating globes are provided by Veazey in U.S. Patent No. 4,102,121, Domen in U.S. Patent No. 4,714,351 and Mariotti in U.S. Patent No. 3,197,893. In each of the devices described in these patents, a different mechanism is employed to impart an appropriate "nodding" motion to an internal baffle to simulate the effect of the earth's orbit about the sun on a simulated day/night pattern for their globes. In each case, the mechanisms are complex and do not lend themselves to inexpensive production techniques.

Therefore, a need exists for a world globe model which indicates a day/night demarkation on the surface of the globe model with a simple, reliable and inexpensive mechanism.

A need also exists for a globe model which simulates a day/night illumination pattern with a simple, reliable and economical mechanism.

### SUMMARY OF THE INVENTION

It is therefore an object of the present invention to provide a day/night globe or other planetary model which indicates a day/night demarkation on the globe's surface with a simple, reliable and economical mechanism.

The invention achieves this object by the features of claim. The sphere is supported by a substantially equatorial support annulus located substantially parallel to an equatorial plane of the sphere. The support annulus is pivotally connected to a frame on a seasonal axis within the equatorial plane. A seasonal adjustment mechanism is journaled for rotation with the support annulus so that adjustment thereof places the polar axis of the sphere at an appropriate declination for a given month. A rotational mechanism is employed for rotating a day/night demarkation on the surface of the sphere approximately once each day so that by setting the seasonal adjustment mechanism appropriately and rotating the day/night demarkation on the sphere, a substantially correct day/night demarkation for a given time of year and local time of day is produced. The sphere thus being substantially equitorially supported, and the equatorial support being pivoted to provide the polar axis (or equitorial plane) with the correct declination with respect to an imaginary ecliptic plane, this day/night cycle can be simulated by a relatively simple mechanism.

The sphere is substantially hollow and semi-transparent and the rotating mechanism includes an internal light source mounted on an internal baffle. A motor fixed to the frame rotates the baffle with respect thereto (and with respect to the sphere) while the sphere "nods" through an angle of ± 23.5 degrees according to the setting of the seasonal adjustment mechanism. In this manner, approximately one-half of the sphere is bathed in simulated sunlight, and the remaining half is in simulated darkness for a given local time of day and month of year.

Rotation of the baffle by the motor simulates the motion of the sun across the surface of the sphere. An aperture, in the southern polar region of the sphere subtending an angle of approximately 47 degrees allows an axle to connect the motor with the rotating baffle throughout the seasonal "nodding" motion of the sphere by adjustment of the seasonal adjustment mechanism. A substantially opaque, boot can fill the aperture to prevent leakage of light from inside the sphere through the aperture.

A time calculating ring can be positioned on top of the equatorial support annulus to permit calculation of time differences at various longitudes on the planetary model.

### BRIEF DESCRIPTION OF THE DRAWINGS

Figure 1 is an isometric view of a day/night globe employing the invention.

Figure 2 is a side elevational view of the globe shown in Figure 1.

Figure 2A is an enlarged, elevational view of circled area 2A in Figure 2.

Figure 3 is a cross-sectional view taken along line 3-3 of Figure 1.

Figure 4 is an enlarged, partial, sectional view of circled area 4 in Figure 3.

Figure 5 is a sectional view taken along line 5-5 of Figure 3.

Figure 6 is a top plan view of a time calculation ring employable with either the preferred or alternate embodiment of the invention.

### DETAILED DESCRIPTION OF THE PREFERRED EMBODIMENTS

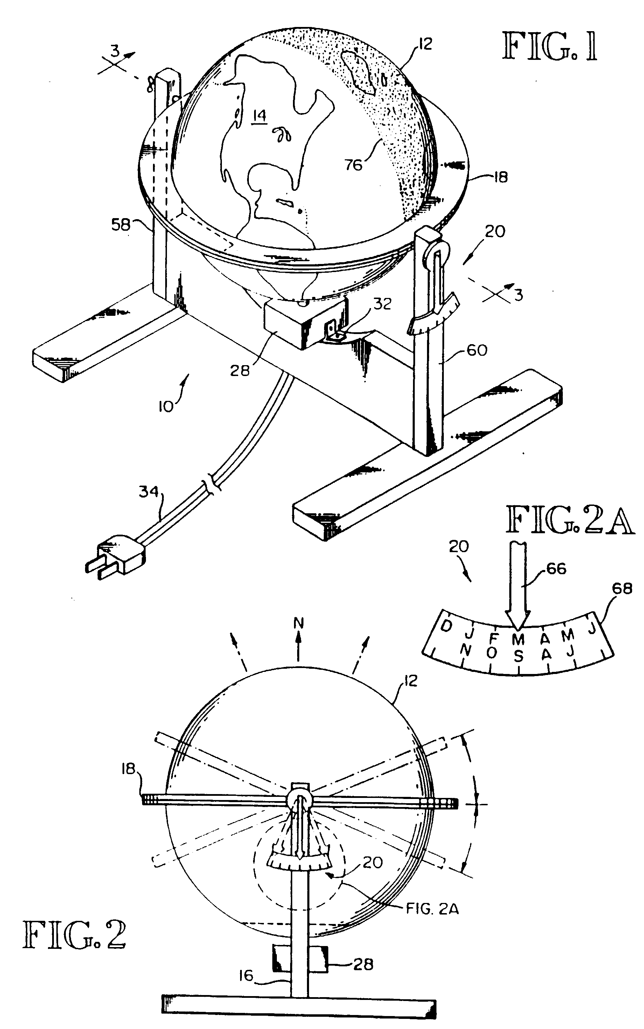

A sunlit world globe, in accordance with the principles of the present invention is generally indicated at Reference Numeral 10 in Figure 1. The globe substantially simulates the day/night appearance of the earth as seen from space with a simple, reliable and economical-to-manufacture mechanism as will be described further hereinbelow. As used herein, the terms "globe", "sphere", and "planetary model" are deemed interchangeable. Although the embodiments shown in the figures represent the planet earth, the structures and mechanisms described herein can be applied to other planatary bodies.

The globe 10 shown in Figur 1 has a substantially spherical, semi-transparent shell 12 having printed thereon various planatary features 14.

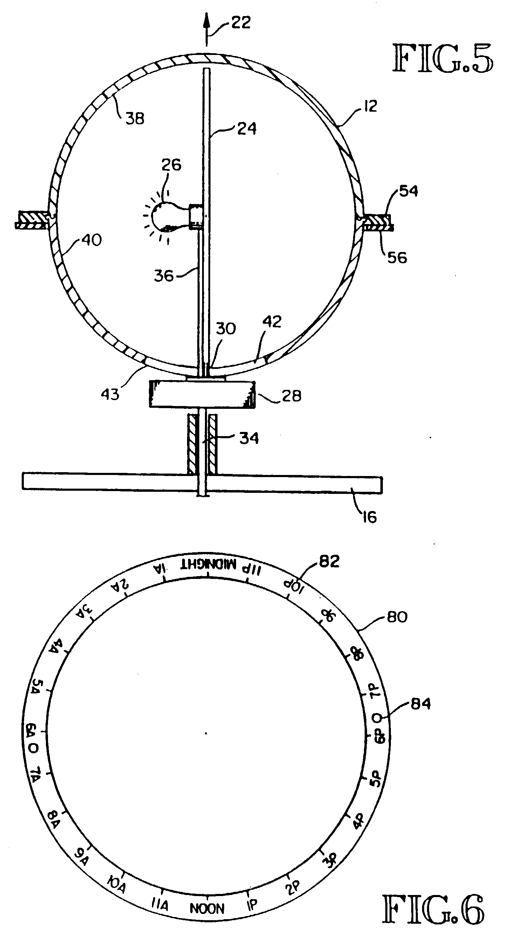

A frame 16 supports a substantially equitorial support ring 18 which is in contact with the shell 12. A seasonal adjustment mechanism generally indicated at reference numeral 20 pivotally interconnects the equatorial support ring 18 and the frame 16 so that a substantially vertical polar axis (reference numeral 22 in Figs. 2 and 5) can be set with the appropriate declination for the month of the year.

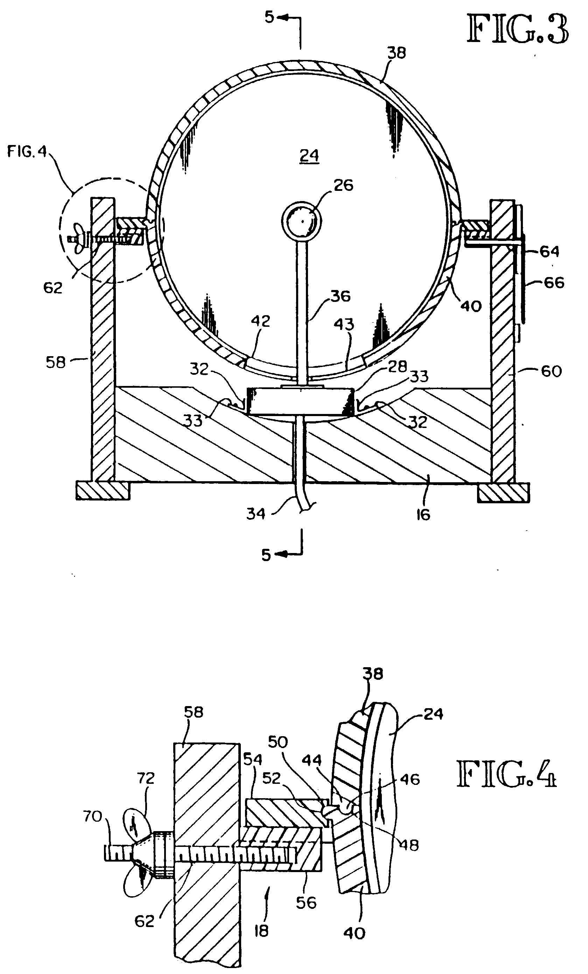

As best seen in Figures 3 and 5, the shell is provided with an interior baffle 24 having an interior diameter approximately equal to the diameter of the shell 12. The interior baffle supports a conventional lamp or lamp 26 for illuminating one half of the shell. The baffle can be totally reflective but is preferably semi-transparent so that both hemispheres of the shell are illuminated with the "day" side more brightly illuminated than the "night" side.

A conventional, 60 Hz synchronous electric clock motor (not shown) is contained in a motor housing 28 and drives the baffle 24 and lamp 26 about a vertical axis defined by an axle 30 (see Fig. 5) once every approximately 24 hours. The synchronous clock motor 28 includes a 2:1 reduction gear mechanism of conventional design to convert the motor which completes one revolution every 12 hours into a 24-hour cycle clock. Preferably, the reduction ratio is slightly less then 2:1 so that the baffle revolves once every 23 hours, 56 minutes and 4.9 seconds to simulate sidereal time. If it is preferred to have the globe 10 simulate solar time, then a reduction ratio of 2:1 will suffice. The motor housing 28 is fixed to the frame 16 by brackets 32 and screws 33 against translational and rotational movement.

A conventional alternating current cord 34 powers the motor in housing 28 with conventional house current. The lamp 26 communicates with inverting circuitry (not shown) of conventional design in the motor housing 28 through a power line 36. The circuitry is entirely of the conventional AC/DC converting type employing a step-down transformer, diode bridge, smoothing capacitor and resistor to convert the 60 Hz household current to 12 volt direct current. The lamp 26 can therefore be any variety of conventional 12 volt DC bulb selected for desired brightness.

The shell 12 is manufactured in northern and southern hemispheres 38, 40 joined by a frictional engagement lip 44. The northern hemisphere has a downwardly depending portion 46 which engages a concavity 48 in the southern hemisphere in an interference fit so that the hemispheres do not become inadvertently dislodged. This construction is simple, inexpensive and facilitates access to rotating baffle 24 and lamp 26. The southern hemisphere 40 has a substantially circular aperture 42 subtending an angle of approximately 47 degrees with respect to the center of the sphere. This aperture allows the shell 12 to "nod" with respect to the frame 16 through an angle of ± 23.5 degrees to simulate the position of the earth's polar axis with respect to the ecliptic plane throughout the earth's orbit about the sun. A rubber boot 43 substantially seals the aperture and permits the axle 30 and power line 36 to pass therethrough. The rubber boot has a small opening therein to permit relative rotation of the sphere with respect to the axle and the power cord.

The power cord 36 communicates with the hereinabove described AC/DC converting circuitry by way of conventional slip rings (not shown) in the motor housing 28 such as those described by Carlson in U.S. Patent No. 4,936,779, the disclosure of which is incorporated herein by reference. The southern hemisphere also has a radially outwardly directed, circumferential lip 50, best seen in Figure 4 which is received in a corresponding, concavity 52 in the equatorial support ring 18. The support ring 18 comprises an upper annulus 54 having a substantially smooth, lower bearing surface which is slidable with respect to a lower annulus 56. The upper annulus 54 has an interior diameter which is substantially equal to the diameter of the spherical shell 12 and an outer diameter which is somewhat smaller than the horizontal distance between the inner sides of frame uprights 58, 60. The lower annulus 56 is journaled by pivot pins 62, 64 to the frame uprights 58, 60. The inner diameter of the lower annulus is somewhat larger than the diameter of the spherical shell 12. Thus, the sphere which is fixed to the upper annulus can rotate with respect to the frame 16 because the upper annulus rotatably supports the lower annulus. Thus the sphere 12 can be rotated manually with respect to the baffle 24 and motor housing 28 without complicated clutch mechanisms, differentials, etc. Simultaneously, the sphere and equatorial support ring 18 can pivot as a unit with respect to the frame 16 about the substantially equatorial axis defined by pivot pins 62, 64 which is perpendicular to the polar axis 22 in Figures 2 and 5.

It should be apparent that by displacing the equatorial support ring as shown in Figure 2 from the horizontal position shown in solid lines, the polar axis 22 can be inclined or declined by 23.5 degrees to either the left or the right to simulate the position of the earth's polar axis with respect to the ecliptic plane (represented by the floor on which the frame 16 rests) at various times of the year. For this purpose, the globe is preferably provided with the seasonal adjustment mechanism 20 as shown in Figure 2 and in detail in Figure 2A. The seasonal adjustment mechanism includes a pointer 66 journaled for rotation with pivot pin 64. The mechanism is also provided with a scale 68 shown in Figure 2A having demarcations by month, the months having the summer and winter solstices (June and December) in the center of the scale and the months having the vernal and autumnal equinox (March and September) at far ends of the scale. The pivot pin 62 (which is diametrically opposed from pivot pin 64 - see Fig. 4) is provided with threads 70 so that a wing nut 72 can be tightened against a washer 74 with respect to the frame upright 58 to fix the setting of the pointer 66 for the appropriate month of the year. After setting the pointer appropriately, the sphere 12 can be synchronized with respect to the internal baffle 24 to simulate the correct day/night pattern on the sphere's surface for the appropriate time of day. Such synchronization is easily accomplished. As previously stated, the sphere 22 and upper annulus 54 connected thereto can rotate with respect to the lower annulus 56 and frame 16. The user merely plugs in the motor (which begins rotating the baffle 24 at a slow speed, and illuminates the lamp 26) and then manually rotates the sphere with respect to the baffle until the day/night demarkation 76 is at the correct position for the current time of day while the pointer 66 is positioned on the current month. As long as the sphere is not rotated with respect to the frame, the baffle will remain synchronized as the user adjusts the pointer 66 for different months of the year. The frame 16 can be provided with conventional casters (not shown) to translate or rotate the entire glove 10 with respect to the floor.

Figure 6 illustrates a substantially transparent time ring 80 having demarcations in the form of post meridian and ante meridian power markings. The ring is dimensioned so as to reside on top of the upper annulus 54. A knob 84 is fixed to the time ring and permits the user to align the current time demarcations with his local longitude. The remaining demarkation shows the corresponding time at other latitudes around the sphere.

The embodiment has a minimum of moving parts, is simple to manufacture and is extremely rugged. Those of ordinary skill in the art will perceive other embodiments which although not described in detail here will be obvious variations thereof. These other embodiments are considered to fall within the scope of this disclosure.

## Claims

1. A day/night indicating globe, comprising:
a sphere (12) for representing a planetary surface, the sphere (12) having a centre, an equator defining an equatorial plane, and a polar axis (22) having north and south poles, said sphere (12) is substantially hollow and semi-transparent;
a substantially equatorial support annulus (18) located substantially parallel to the equatorial plane;
a lamp (26) located within the sphere (12);
means (36) for illuminating the lamp (26);
a lamp baffle (24) located within the sphere (12), so that approximately one half of the sphere (12) is bathed in light;
a seasonal adjustment mechanism (20); and
a rotational means for providing a relative rotational motion between the sphere (12) and the baffle (24)
**characterized in that**
a frame is pivotally connected to the support annulus (18) about a seasonal axis (62, 64) within the equatorial plane and substantially perpendicular to the polar axis (22);
said equatorial support annulus (18) has a lower, substantially equatorial declination ring (56) having an upper bearing surface and an inner diameter larger than the diameter of the sphere (12) and two radially extending, diametrically opposed pivot pins (62, 64) fixed thereto and pivotally connected to the frame and the seasonal axis, with one of the pins (64) connected to the seasonal adjustment mechanism (20), and an upper, substantially equatorial support ring (54) connected to the sphere (12) and having a lower bearing face in sliding contact with the upper bearing surface of the declination ring (56) and an inner diameter no larger than the diameter of the sphere (12);
said seasonal adjustment mechanism (20) is journaled for rotation with the support annulus (18), adjusts an axis of the lamp baffle (24) relatively to the polar axis (22) approximately in range of ± 23 ½ degrees measured at the centre of the sphere (12) whereby the axis of the lamp baffle (24) intersects the polar axis (22) approximately at the centre of the sphere (12) and having an indicator mechanism (66, 68) for indicating the adjustment of the axis;
said sphere (12) defines a substantially circular aperture (42) centered at the south pole and subtending an angle with respect to the centre of approximately forty-seven degrees and the baffle (24) is supported by means extending through the aperture (42), whereby the rotational means provides for a relative revolution between the sphere (12) and the baffle (24) of one each day.

2. The globe of claim 1, wherein the rotational means includes the lamp (26), means (36) for illuminating the lamp (26), the lamp baffle (24) and a drive means (28) connected to the lamp baffle through the aperture (42) and fixed with respect to the frame so that the baffle (24) and the lamp (26) are rotatable with respect to the sphere (12).

3. The globe of claim 2, wherein the aperture (42) is substantially obscured by a flexible, substantially opaque boot (42), and wherein the motor (28) is connected to the baffle (24) by an axis (30) penetrating the boot (43).

4. The globe of claim 1, wherein the seasonal adjustment mechanism (20) includes an elongated pointer (66) and a scale (68) having markings corresponding to the months of the year with the months having solstices at far ends of the scale (68) so that the equatorial plane is at its greatest declination when the pointer (66) is so adjusted, and markings corresponding to equinoxes at a centre of the scale (68) so that the equatorial plane is at substantially zero declination when the pointer (66) is so adjusted;
said equatorial support annulus (18) has a lower, substantially equatorial declination ring (56) having an upper bearing surface and an inner diameter larger than the diameter of the sphere (12) and two radially extending, diametrically opposed pivot pins (62, 64) fixed thereto and pivotally connected to the frame on the seasonal axis, with one of the pins (64) connected to the seasonal adjustment mechanism (20), and an upper, substantially equatorial support ring (54) connected to the sphere (12) and having a lower bearing surface in sliding contact with the upper bearing surface of the declination ring (56) and an inner diameter no larger than the diameter of the sphere (12).

5. The globe of claim 4, wherein one of the pins (62) has a frictional mechanism (70, 72) for engaging the frame to maintain the setting of the seasonal adjustment mechanism (20).

6. The globe of claim 5, wherein the lower declination ring (56) and the upper support ring (54) are substantially transparent.

7. The globe of claim 1, including a substantially transparent, rotatable time ring (80) positioned on top of the support annulus (54) for calculating local times at various positions on the sphere.

## Patentansprüche

1. Globus mit Tag/Nacht-Anzeige, der umfaßt:
eine Kugel (12) zum Darstellen einer Planetenoberfläche, wobei die Kugel (12) einen Mittelpunkt, einen Äquator, der die Äquatorialebene vorgibt, und eine Polachse (22) mit Nord- und Südpol aufweist, und wobei die Kugel (12) im wesentlichen hohl und halbtransparent ist;
einen im wesentlichen äquatorialen Tragring (18), der im wesentlichen parallel zu der Äquatorialebene angeordnet ist;
eine Lampe (26), die innerhalb der Kugel (12) angeordnet ist;
Einrichtungen (36) zum Erleuchtenlassen der Lampe (26);
einen Lampenbeschatter (24), der innerhalb der Kugel (12) derart angeordnet ist, daß ungefähr die Hälfte der Kugel (12) in Licht getaucht ist;
einen Jahreszeiteneinstellmechanismus (20); und
eine Rotationseinrichtung zum Bereitstellen einer Relativdrehbewegung zwischen der Kugel (12) und dem Beschatter (24)
**dadurch gekennzeichnet,** daß
ein Rahmen schwenkbar mit dem Tragring (18) um eine Jahreszeitenachse (62, 64) in der Äquatorialebene und im wesentlichen rechtwinklig zu der Polachse (22) verbunden ist;
der äquatoriale Tragring (18) einen unteren, im wesentlichen äquatorialen Deklinationsring (56) mit einer oberen Lagerfläche und einem Innendurchmesser, der größer ist als der Durchmesser von der Kugel (12), und zwei radial sich erstreckende, diametral gegenüberliegende Schwenkstifte (62, 74), die an diesem befestigt sind und schwenkbar mit dem Rahmen und der Jahreszeitenachse verbunden sind, aufweist, wobei einer der Stifte (64) mit dem Jahreszeiteneinstellmechanismus (20) und ein oberer im wesentlichen äquatorialer Tragring (54) mit der Kugel (12) verbunden ist und wobei eine untere Lagerfläche verschiebbar mit der oberen Lagerfläche des Deklinationsrings (56) in Berührung steht und einen Innendurchmesser von nicht größer als der Durchmesser der Kugel aufweist;
der Jahreszeiteneinstellmechanismus (20) zum Drehen mit dem Tragring (18) drehbar gelagert ist, eine Achse des Lampenbeschatters (24) relativ zu der Polachse (22) ungefähr im Bereich von ± 23 1/2°, gemessen von der Mitte der Kugel (12), einstellbar ist, wobei die Achse des Lampenbeschatters (24) die Polachse (22) im wesentlichen in der Mitte der Kugel (12) schneidet und einen Anzeigemechanismus (66, 68) zum Anzeigen der Achseneinstellung aufweist;
die Kugel (12) umgrenzt eine im wesentlichen kreisförmige Öffnung (42), die mittig an dem Südpol angeordnet ist und bezüglich der Mitte einen Winkel von ungefähr 47° einnimmt und der Beschatter (24) durch Einrichtungen getragen ist, die sich durch die Öffnung (42) erstrecken, wobei die Rotationseinrichtung eine Relativdrehung zwischen der Kugel (12) und dem Beschatter (24) von einem Tag bereitstellt.

2. Globus nach Anspruch 1, worin die Rotationseinrichtung eine Lampe (26), Einrichtungen (36) zum Beleuchten der Lampe (26), den Lampenbeschatter (24) und eine Antriebseinrichtung (28) aufweist, die mit dem Lampenbeschatter durch die Öffnung (42) verbunden ist und bezüglich des Rahmens derart befestigt ist, daß der Beschatter (24) und die Lampe (26) drehbar bezüglich der Kugel (12) sind.

3. Globus nach Anspruch 2, worin die Öffnung (42) im wesentlichen von einer flexiblen, im wesentlichen undurchsichtigen Membran (43) verdunkelt ist und worin der Motor (28) mit dem Beschatter (24) durch eine Achse (30), die sich durch die Membran (43) erstreckt, verbunden ist.

4. Globus nach Anspruch 1, worin der Jahreszeiteneinstellmechanismus (20) einen länglichen Zeiger (66) und eine Skala (68), die Markierungen aufweist, die den Monaten des Jahres entsprechen, umfaßt, wobei die Monate mit den Sonnenwenden an den äußeren Enden der Skala (68) derart angeordnet sind, daß die Äquatorrealebene sich in ihrer größten Neigung befindet, wenn der Zeiger (66) so eingestellt ist, und wobei Markierungen, die den Tagundnachtgleichen entsprechen, in der Mitte der Skala (68) derart angeordnet sind, daß die Äquatorialebene im wesentlichen keine Neigung aufweist, wenn der Zeiger (66) so eingestellt ist;
der äquatoriale Tragring (18) einen unteren, im wesentlichen äquatorialen Deklinationsring (56) mit einer oberen Lagerfläche und einem Innendurchmesser aufweist, der größer als der Durchmesser der Kugel (12) ist, und zwei radial sich erstreckende, diametral gegenüberliegende Schwenkstifte (62, 64), die an diesem befestigt sind und schwenkbar mit dem Rahmen und der Jahreszeitenachse verbunden sind, aufweist, wobei einer der Stifte (64) mit dem Jahreszeiteneinstellmechanismus (20) verbunden ist und ein oberer, im wesentlichen äquatorialer Tragring (54) mit der Kugel (12) verbunden ist und wobei eine untere Lagerfläche verschiebbar mit der oberen Lagerfläche des Deklinationsrings (56) in Berührung steht und einen Innendurchmesser von nicht größer als der Durchmesser der Kugel (12) aufweist.

5. Globus nach Anspruch 4, worin einer der Stifte (62) einen Reibungsmechanismus (70, 72) zum Berühren des Rahmens aufweist, um die Einstellung des Jahreszeiteneinstellmechanismus (20) beizubehalten.

6. Globus nach Anspruch 5, worin der untere Deklinationsring (56) und der obere Tragring (54) im wesentlichen transparent sind.

7. Globus nach Anspruch 1, der im wesentlichen einen transparenten, drehbaren Zeitring (80) aufweist, der auf der Oberseite des Tragrings (54) zum Berechnen der Ortszeiten an verschiedenen Punkten der Kugel angeordnet ist.

## Revendications

1. Globe terrestre indiquant le jour et la nuit comprenant :
une sphère (12) pour représenter une surface planétaire, la sphère (12) ayant un centre, un équateur définissant un plan équatorial, et un axe polaire (22) ayant des pôles nord et sud, ladite sphère (12) étant substantielement creuse et semi-transparente ;
un support annulaire substantiellement équatorial (18) situé substantiellement parallèlement au plan équatorial ;
une lampe (26) située dans la sphère (12) ;
des moyens (36) pour éclairer la lampe (26) ;
un déflecteur de lampe (24) situé dans la sphère (12) de sorte qu'environ une moitié de la sphère (12) est baignée de lumière ;
un mécanisme de réglage saisonnier (20) ; et
un moyen de rotation pour fournir un mouvement relatif de rotation entre la sphère (12) et le déflecteur (24)
caractérisé en ce qu'un châssis est raccordé de façon pivotante au support annulaire (18) autour d'un axe saisonnier (62, 64) dans le plan équatorial et perpendiculaire à l'axe polaire (22) ;
ledit support annulaire équatorial (18) a un anneau de déclinaison inférieur (56) substantiellement équatorial ayant une surface portante supérieure et un diamètre intérieur plus grand que le diamètre de la sphère (12) et deux tourillons de pivotement (62, 64) s'étendant radialement, diamétralement opposés fixés à celui-ci et raccordés de façon pivotante au châssis et à l'axe saisonnier avec l'un des tourillons (64) raccordé au mécanisme de réglage saisonnier (20) et un anneau de support supérieur substantiellement équatorial (54) raccordé à la sphère (12) et ayant une face portante inférieure en contact coulissant avec la surface portante supérieure de l'anneau de déclinaison (56) et un diamètre intérieur pas plus grand que le diamètre de la sphère (12);
ledit mécanisme de réglage saisonnier (20) est monté sur palier pour rotation avec le support annulaire (18), ajuste un axe du déflecteur de lampe (24) par rapport à l'axe polaire (22) sur une portée d'environ ± 23 1/2 degrés mesurée au centre de la sphère (12), ce par quoi l'axe du déflecteur de lampe (24) coupe l'axe polaire (22) approximativement au centre de la sphère (12) et ayant un mécanisme indicateur (66, 68) pour indiquer le réglage de l'axe;
ladite sphère (12) définit une ouverture substantiellement circulaire (42) centrée au pôle sud et sous-tendant un angle par rapport au centre d'approximativement quarante sept degrés et le déflecteur (24) est supporté par un moyen s'étendant à travers l'ouverture (42), ce par quoi le moyen de rotation assure une rotation relative entre la sphère (12) et le déflecteur (24) d'un tour chaque jour.

2. Globe selon la revendication 1, dans lequel le moyen de rotation comprend la lampe (26), des moyens (36) pour éclairer la lampe (26), le déflecteur de lampe (24) et un moyen d'entraînement (28) raccordé au déflecteur de lampe par l'ouverture (42) et fixé par rapport au châssis de sorte que le déflecteur (24) et la lampe (26) soient rotatifs par rapport à la sphère (12).

3. Globe selon la revendication 2, dans lequel l'ouverture (42) est substantiellement obscurcie par une gaine flexible substantiellement opaque (42) et dans lequel le moteur (28) est raccordé au déflecteur (24) par un axe (30) pénétrant la gaine (43).

4. Globe selon la revendication 1, dans lequel le mécanisme de réglage saisonnier (20) comprend un index allongé (66) et une échelle (68) comportant des repères correspondant aux mois de l'année avec les mois ayant des solstices aux extrémités de l'échelle (68) de sorte que le plan équatorial se trouve à sa plus grande déclinaison lorsque l'index (66) est ainsi ajusté et des repères correspondant aux équinoxes à un centre de l'échelle (68) de sorte que le plan équatorial est substantiellement à une déclinaison nulle lorsque l'index (66) est ainsi ajusté ;
ledit support annulaire équatorial (18) a un anneau de déclinaison inférieur substantiellement équatorial (56) ayant une surface portante supérieure et un diamètre intérieur plus grand que le diamètre de la sphère (12) et deux tourillons de pivotement (62, 64) s'étendant radialement, diamétralement opposés, fixés à celui-ci et raccordés de façon pivotante au châssis sur l'axe saisonnier, avec l'un des tourillons (64) raccordé au mécanisme de réglage saisonnier (20) et un anneau de support supérieur substantiellement équatorial (54) raccordé à la sphère (12) et ayant une surface portante inférieure en contact coulissant avec la surface portante supérieure de l'anneau de déclinaison (56) et un diamètre intérieur pas plus grand que le diamètre de la sphère (12).

5. Globe selon la revendication 4, dans lequel l'un des tourillons (62) comporte un mécanisme à friction (70, 72) pour engager le châssis afin de maintenir le réglage du mécanisme de réglage saisonnier (20).

6. Globe selon la revendication 5, dans lequel l'anneau de déclinaison inférieur (56) et l'anneau de support supérieur (54) sont substantiellement transparents.

7. Globe selon la revendication 1, comprenant un anneau de temps (80) rotatif et substantiellement transparent positionné au sommet du support annulaire (54) pour calculer les temps locaux à différentes positions sur la sphère.
